# EUROPEAN PATENT APPLICATION

(11) **EP 3 889 647 A1**
(43) Date of publication of application: **06.10.2021**
(21) Application number: 20166572.6
(22) Date of filing: 30.03.2020
(51) Int. Cl.: G01S 19/19, G01S 19/28, G01S 19/33, G01S 19/39, G01S 19/42, G01S 19/34

(54) **POSITIONING OF WEARABLE TRAINING COMPUTER**

(71) Applicant: Polar Electro Oy, 90440 Kempele (FI)
(72) Inventor: Kuosmonen, Atte, 90440 Kempele (FI)
(74) Representative: Kolster Oy Ab

(57) **Abstract**

A wearable training computer comprising a processing circuitry configured to determine a location of the wearable training computer based on received location information. Based on the location of the wearable training computer, the processing circuitry is further configured to select a satellite positioning system configuration used for determining the location of the wearable training computer during a physical exercise.

## Description

### TECHNICAL FIELD

The present invention relates to a field of wearable training computers, especially positioning of the wearable training computers.

### TECHNICAL BACKGROUND

Satellite positioning systems are widely used nowadays in the wearable training computers for providing positioning information. A performance of the satellite positioning systems varies in different geographical locations. Finding of the optimal satellite positioning system(s) in the different locations may be difficult especially when a power consumption of the wearable training computer is taken into account and therefore, there are many challenges in the known solutions. Hence, a more sophisticated solution for selecting the satellite positioning system(s) for the wearable training computer is needed to improve the performance of the positioning of the wearable training computer and to optimize the power consumption.

### BRIEF DESCRIPTION

The present invention is defined by the subject matter of the independent claim.

Embodiments are defined in the dependent claims.

The embodiments and features, if any, described in this specification that do not fall under the scope of the independent claim are to be interpreted as examples useful for understanding various embodiments of the invention.

### BRIEF DESCRIPTION OF THE DRAWINGS

In the following the invention will be described in greater detail by means of preferred embodiments with reference to the attached drawings, in which
Figure 1 illustrates a wearable training computer with a satellite positioning system according to an embodiment of the invention;
Figure 2 illustrates satellite positioning system configurations according to an embodiment of the invention;
Figures 3A and 3B illustrate the satellite positioning system configurations with frequencies according to an embodiment of the invention;
Figure 4 illustrates a wiring diagram of a positioning chipset according to an embodiment of the invention;
Figures 5A and 5B illustrate flowcharts according to an embodiment of the invention; and
Figures 6, 7 and 8 illustrate a selection of the satellite positioning system configuration according to an embodiment of the invention.

### DETAILED DESCRIPTION OF THE INVENTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Embodiments of the invention relate to a wearable training computer configured to carry out measurements during a physical exercise performed by a user. The wearable training computer may be a portable system attachable to the user's body. The wearable training computer is configured to measure physiological training data from the user's performance during the physical exercise and to output the training data to the user via a user interface of the training computer and/or via a user interface of another apparatus.

In an embodiment, the wearable training computer may further comprise an apparatus configured to be attached to the object. Such an apparatus may comprise an attachment structure designed and arranged to receive the training computer in a fixed, integrated, or detachable manner and to attach the training computer to the object. The attachment may be realized by a band that may be designed to encircle the object such that the band is attached around the object. The band may comprise locking parts at ends of the band where the locking parts form mutually counterparts such as a buckle and a catch. The locking parts may fix the band around the object as is commonly known in the field of wristwatches, wrist computers etc. Other forms of attachment of wearable devices are equally possible, e.g. the training computer may be integrated or attached to a garment such as a shirt, pants or harness.

In other embodiments, the attachment structure may be arranged to attach the apparatus to the device such as the bicycle. In such embodiments, the apparatus may be or may be comprised in a bike computer, for example.

The wearable training computer may comprise a global navigation satellite system, GNSS, to provide location, navigation and/or tracking capabilities for the wearable training computer. The GNSS uses a plurality of satellite positioning systems like, for example, Global Positioning System (GPS), Galileo, Glonass, BeiDou and Quasi-Zenith Satellite System (QZSS). Each satellite positioning system comprises a plurality of satellites. Performances of the satellite positioning system may vary in different geographical locations.

Traditionally a user of the wearable training computer selects the satellite positioning system(s) used for positioning of the wearable training computer. The wearable training computer may propose the satellite positioning system for the user, for example, based on the location. The selected satellite positioning system is not necessarily optimum from the performance of the positioning and/or power consumption of the wearable training computer point of view. Especially when there are many satellite positioning systems available, the selection of the optimum positioning configuration may be challenging. In addition, a power consumption of the wearable training computer may be higher, when a plurality of the satellite positioning system are used. Therefore, there is a need for a solution wherein the wearable training computer is capable of determining automatically the optimum positioning configuration for positioning.

According to an aspect, there is provided a wearable training computer, comprising: a processing circuitry configured to determine a location of the wearable training computer based on received location information, and based on the location of the wearable training computer, the processing circuitry is further configured to select a satellite positioning system configuration used for determining the location of the wearable training computer during a physical exercise.

A term "satellite positioning system configuration" (also a term "positioning configuration" used in this application) refers to a setup of the wearable training computer that is used for determining the location of the wearable training computer. The setup may include selection of a satellite positioning receiver configuration amongst multiple different satellite positioning receiver configurations available to the wearable training computer. The satellite positioning system configuration may refer to using, concurrently, at least one satellite positioning receiver of the wearable training computer.

A term "satellite positioning system" refers to satellite based positioning systems, like for example, GPS, Galileo, Glonass, BeiDou and QZSS. Each satellite positioning system comprises a plurality of satellites. The satellite positioning system may provide different performances in the different geographical locations. For example, Galileo may provide the best performance in Europe or BeiDou in China etc. Hence, the determination of the location of the wearable training computer may improve the selection of the satellite positioning system configuration.

The wearable training computer may be used to measure biometric data from a user of the wearable training computer during the exercise and also to provide data about the physical exercise. The data of the physical exercise may be duration, distance and speed, for example. Prior to turning on the monitoring of the physical exercise, e.g. an outdoors exercise, the wearable training computer may determine its location so that the positioning of the wearable training computer during the physical exercise is possible.

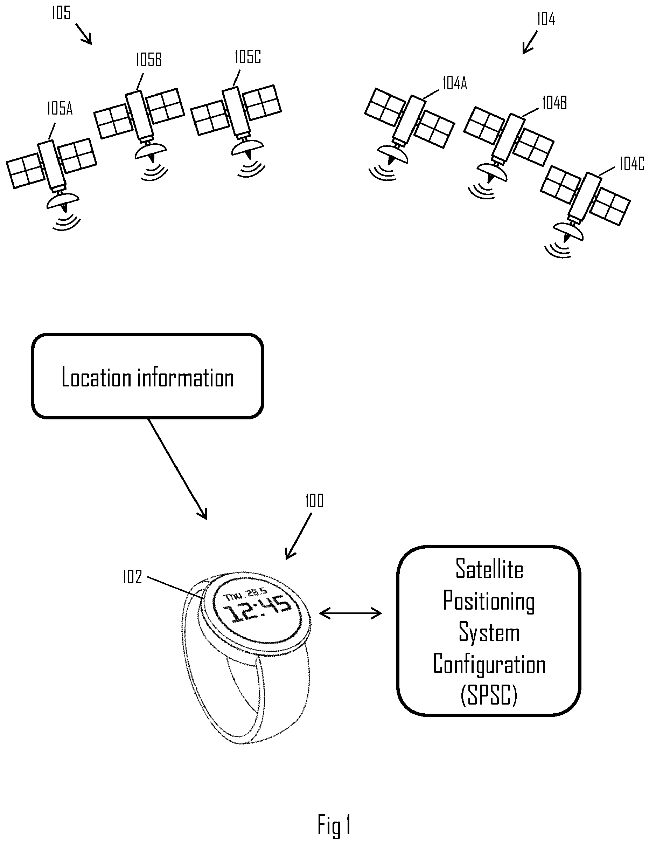

Referring to Figure 1, in an embodiment, the wearable training computer 100 comprises the processing circuitry 102 configured to receive the location information to determine the location of the wearable training computer 100. The location information may be any kind of data that can be used for determining the geographical location of the wearable training computer. The processing unit may apply the data that is stored in a memory of the wearable training computer. The data may also be in an outer database like in the cloud service, for example. Hence, the processing circuitry is configured to get the data from the wearable training computer and/or from an outer source. In an embodiment, the wearable training computer forms a connection to other appliance(s) to receive the data related to the location information.

In an embodiment, when the location of the wearable training computer is determined by the processing circuitry, it further automatically selects the satellite positioning system configuration. Still referring to Figure 1, the wearable training computer receives the location information and the processing circuitry 102 determines the location of the wearable training computer 100. Based on the determined location of the wearable training computer 100, the processing circuitry 102 is further configured to determine which satellite positing system configuration SPSC is the most suitable for positioning in the location of the wearable training computer, in other words, is the most optimal from the performance point of view. Then the processing circuitry 102 selects the configuration that is determined to be the most suitable. The processing circuitry may monitor a satellite visibility between the wearable training computer 100 and the satellites 104A - C, 105A - C when the determining and selecting the positioning configuration. Figure 1 illustrates a simplified example of the wearable training computer and the satellite positioning systems available to the wearable training computer. There are illustrated two satellite positioning systems 104, 105 having three satellites 104A - C, 105A - C both in the example of Figure 1.

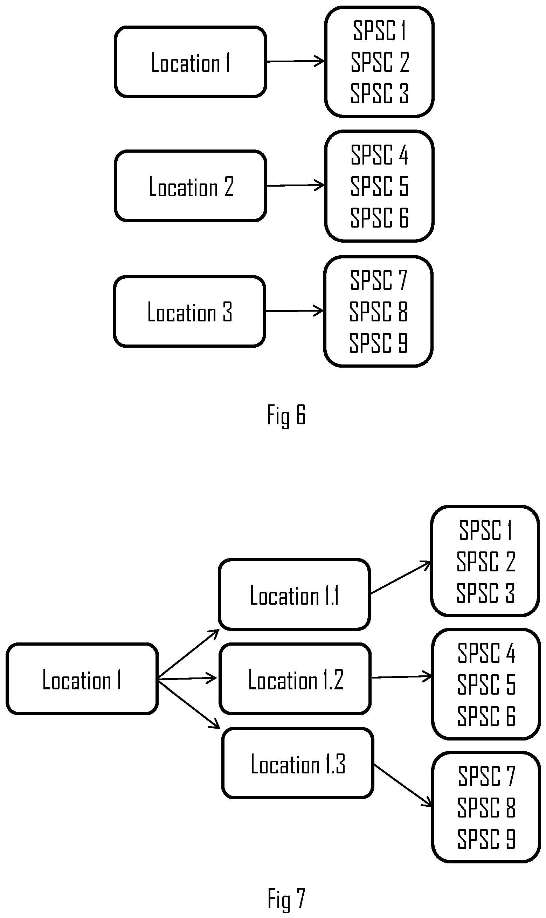

In an embodiment, the selection of the positioning configuration is based on a selection table wherein the locations with preferred positioning configurations are defined. In other words, each location may have the preferred positioning configuration(s) and when the location is determined, the preferred positioning configuration(s) is/are defined with the table. The processing unit is then capable of selecting one configuration of the preferred ones. There may be one or more preferred positioning configurations defined for the each location. Referring to an example illustrated in Figure 6, there are three locations (location 1-3) and each location has three preferred positioning configuration (SPSC 1-9). The location 1 has the preferred configurations SPSC 1-3, the location 2 has the preferred configurations SPSC 4-6 and the location 3 has the preferred configurations 7-9. For example, if the processing circuitry determines that the wearable training computer is in the location 1, it may select one of the preferred configurations SPSC 1-3. The final selection may be done, for example, based on the positioning performance of the positioning configuration. Also a power consumption of the wearable training computer may be taken into account in the selection.

In an embodiment, the location comprises sub-locations in the selection table having preferred positioning configurations. The location may be split to the sub-locations in the selection table. Referring to Figure 7, the location 1 may have sub-groups (sub-locations) 1.1, 1.2 and 1.3 and each sub-group may have one or more preferred positioning configurations SPSC 1 - 9. For example, at first the location may be defined in a continent level (location 1) and then the more exact location in the continent is defined (location 1.1 - 1.3), and the positioning configuration is then selected based on the exact location. The invention provides a very simple and effective solution for selecting the most suitable satellite positioning system configuration automatically. The selection of the satellite positioning system configuration is made based on the actual location of the wearable training computer which enables to find and select the satellite positioning system(s) that provides the best performance in that location. The user of the wearable training computer does not necessarily know what satellite positioning system(s) should be selected in the certain location to get the optimum positioning performance and hence, there is a risk that the user may not get the optimum performance for positioning. The invention clearly overcomes this issue because the selection of the satellite positioning configuration is made automatically by the wearable training computer based on the actual location of the wearable training computer.

In an embodiment, the satellite positioning system configuration comprises a plurality of the satellite positioning systems, wherein the satellite positioning systems are configured, in the selected satellite positioning system configuration, to determine the location of the wearable training computer during a physical exercise. As described, the processing circuitry is configured to select automatically the satellite positioning system configuration that is capable of providing the optimum performance for determining the location of the wearable training computer. In some certain location just one satellite positioning system may not be enough to get the optimum performance for positioning and then the processing circuitry may select a combination of several satellite positioning systems to improve the positioning performance.

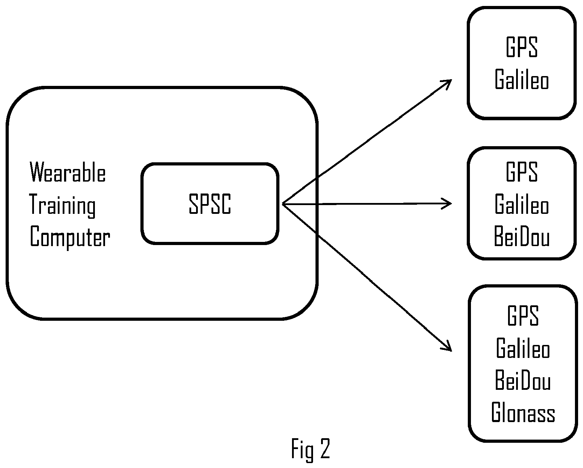

Referring to Figure 2, in a first example, any one of the described positioning configurations may comprise GPS and Galileo. In a second example, any one of the described positioning configuration may comprise GPS, Galileo and BeiDou. In a third example, any one of the described positioning configuration may comprise GPS, Galieleo, BeiDou and Glonass.

For example, the processing circuitry may determine that in the certain location of the wearable training computer a combination of GPS and Galileo systems provide the optimum performance for positioning. Then the processing circuitry may select the satellite positioning system configuration according to the example 1 of Figure 2. In another example, in some other location only GPS and Galileo may not be capable of providing good performance for positioning. Then the processing circuitry may select the positioning configuration comprising GPS, Galileo, BeiDou and QZSS to get the higher performance for positioning. In other words, the processing circuitry selects the configuration according to the third example in Figure 2. Basically, the more satellite positioning systems there are in the satellite positioning configuration, the higher is the positioning performance of the satellite positioning system configuration.

In an embodiment, the processing circuitry is configured to select a frequency of the satellite positioning system based on performance of the satellite positioning system configuration. The satellite positioning systems may comprise a plurality of the frequencies for transmitting positioning signals, and frequencies may provide different positioning performances in the different situations or locations. Hence, in addition to the selection of the satellite positioning systems, also the frequency of the satellite positioning receiver may be selected on the basis of the location of the wearable training computer.

In an embodiment, the processing circuitry is configured to select a plurality of frequencies from one satellite positioning system based on the performance of the satellite positioning system configuration.

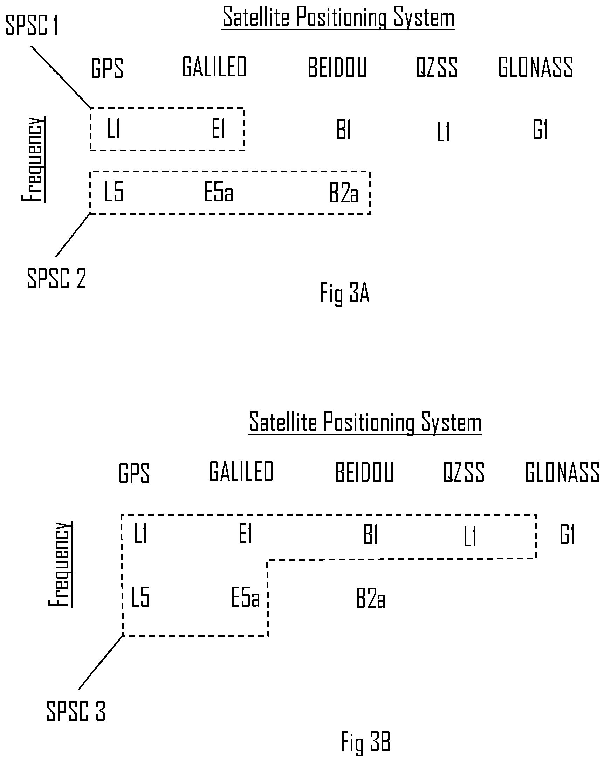

Figure 3A illustrates the satellite positioning systems, frequencies and satellite positioning system configurations according to an embodiment. GPS comprises the frequencies L1 and L5, Galileo comprises the frequencies E1 and E5a, BeiDou comprises the frequencies B1 and B2a, QZSS comprises the frequency L1 and Glonass comprises the frequency G1. A first example of the satellite positioning system configuration SPSC1 consists of the GPS and Galileo satellite positioning systems and the frequencies L1 (GPS) and E1 (Galileo). In other words, the processing circuitry of the wearable training computer may determine that the combination of GPS and Galileo with frequencies L1 and E1 provides the optimal performance for positioning. A second example of the satellite positioning system configuration SPSC2, also illustrated in Figure 3A, consists of GPS, Galileo and BeiDou satellite positioning systems and frequencies L5 (GPS), E5a (Galileo) and B2a (BeiDou). In this example, the processing circuitry may determine that the combination of GPS, Galileo and BeiDou with frequencies L5, E5a and B2a provides the optimal performance for positioning. The satellite positioning system configurations SPSC1 and SPSC2 both are applying several satellite positioning systems but only one frequency per the satellite positioning system and all frequencies are on the same frequency band.

In Figure 3B is illustrated a third example of the satellite positioning system configuration SPSC3 that consists of the GPS, Galileo, Beidou and QZSS satellite positioning systems and the frequencies L1+L5 (GPS), E1+E5a (Galileo), B1 (BeiDou) and L1 (QZSS). Hence, from both GPS and Galileo satellite positioning systems are selected two different frequencies in this configuration to get the optimal positioning performance. Then two different frequency bands may be used.

In an embodiment, the processing circuitry may select the positioning configuration wherein the satellite positioning systems are operating in the same frequency band instead of the positioning configurations wherein the satellite positioning systems are operating in the different frequency band, if the configuration having one frequency band is capable of providing sufficient performance. In other words, both configurations may provide high performance but the configuration operating in one frequency band is preferred (weighted) in the selection of the configuration. This may decrease the power consumption of the wearable training computer.

As can be seen, the selection of the optimum satellite positioning system configuration is a complicated process because of the several satellite positioning systems and their different frequencies. The satellite positioning systems with the different frequencies provide a plurality of different satellite positioning system configurations and to find and select the optimum is not simple. Hence, automated selection of the satellite positioning system configuration according to the invention is very helpful for the user of the wearable training computer.

In an embodiment the processing circuitry is configured to change the selected satellite positioning system configuration based on performance of the satellite positioning system configuration. In an embodiment, the processing circuitry is configured to monitor the performances of the different positioning configurations and when it detects that some other positioning configuration may provide better performance that the selected one, the processing circuitry may change the positioning configuration. In another embodiment, the processing circuitry is configured to detect the performance of the selected positioning configuration and if the performance is deteriorating, the positioning configuration may be changed if some other positioning configuration provides better performance.

In an embodiment, the performance of the satellite positioning system configuration is determined based on a signal performance of the wearable training computer. The signal performance refers to a signal quality between the wearable training computer and the satellites. The signal performance may be monitored by the wearable training computer. In an embodiment, the wearable training computer comprises a measurement circuitry configured to measure the signal performance (quality). Measurement data, provided by the measurement circuitry, is used by the processing circuitry to determine the performance of the positioning configuration.

In an embodiment, a signal-to-noise ratio, SNR, may be used for determining the signal performance of the positioning configurations. For example, the measurement circuitry may be capable of measuring the SNR of the positioning configurations. The SNR compares a level of a desired signal to a level of background noise, it is defined as a ratio of signal power to the noise power. The location as well as orientation and position of the wearable training computer may affect the SNR, and the positioning configuration that provides the best SNR may be selected by the processing circuitry.

In an embodiment, the (signal) performance of the satellite positioning system configuration is determined based on a detected number of satellites in the satellite positioning system. The wearable training computer may be configured to define a number of the available satellites. The number of the satellites may be relative to the performance of the positioning configuration. The more satellites are detected, the better is the performance of the positioning configuration. For example, in some location of the wearable training computer, the minimum requirement of four satellites may be reached by the first positioning configuration but the second positioning configuration may reach a higher number of satellites, thus improving the positioning accuracy. Hence, the second antenna configuration may provide better performance for positioning and may be selected by the processing circuitry. In some case, a sufficient number of satellites may be detected with a first positioning configuration that provides good positioning performance and, at the same time, a second positioning configuration would reach even a higher number of satellites. However, the second position configuration may not be selected because the positioning performance provided by the first positioning configuration is already good enough. Hence, it may not be necessary to change the configuration which is capable of achieving the optimal performance, even if there would be available a configuration that would provide higher performance.

In an embodiment, the performance of the satellite positioning system configuration is determined based on the location of the wearable training computer. The performance of the selected positioning configuration may vary in different locations and hence, the selected positioning configuration may not provide an optimal performance for the wearable training computer in another location wherein the selection is done. As described above, the wearable training computer is used during the physical exercise and the location of the wearable training computer may vary during the exercise. For example, the physical exercise may be-cycling and a distance, driven in the exercise, may be very long. In this case, the selection of the positioning system made in a start location may not necessarily be optimal later in the physical exercise when the user has cycled far from the start point. In other words, the location of the wearable training computer is changed during the exercise such that the selection made before exercise may not provide the optimal positioning performance anymore. Therefore, the processing circuitry may change the positioning configuration during the physical exercise. The selection of the new configuration may be performed, for example, based on the selection table described above.

In an embodiment, the performance of the satellite positioning system configuration is determined based on a terrain type in the location of the wearable training computer. In addition to the geographical location, the terrain type in the location may be taken into account when determining the optimum positioning configuration. The terrain type refers to a landscape in the location of the wearable training computer. The terrain type may affect the performance of the satellite positioning system. For example, mountains or high buildings may provide challenges to the positioning because they may limit a quality of the connection between the satellites and wearable training computer and this may also affect the selection of the satellite positioning system configuration.

For example, in a dense urban area, like in big cities, there may be a lot of high buildings, like skyscrapers, that block the satellite positioning signals. The dense urban area may be very challenging for the positioning and hence, the selected positioning configuration may comprise multiple satellite positioning systems and, optionally, multiple different frequencies of them. The more satellites and their different frequencies are included into the position configuration the higher is the performance of the positioning configuration. For example, the processing circuitry may determine, in addition to the location, the landscape of the location of the wearable training computer. If the location is in the dense urban area, the processing circuitry may select more satellite positioning systems and/or different frequencies of the satellite positioning system to the positioning configuration to get better performance.

Respectively, if the location of the wearable training computer is in a suburban area or a rural area, there may be mountains, canyons, forests and/or other obstacles that limit the performance of the positioning, for example. Like in the dense urban area, the processing circuitry may then select more satellite positioning systems and/or different frequencies of the satellite positioning systems to the positioning configuration to get better performance.

In another example, the terrain type may be mountainous also in the dense urban area. Then, in addition to the high buildings, the mountains or canyons may limit the quality of the satellite connection in the location of the wearable training computer.

In an embodiment, the processing circuitry is configured to determine the terrain type based on a map. The map, used for determining the terrain type, may comprise all needed information about the terrain. In an embodiment, the processing circuitry is configured, after determining of the location of the wearable training computer, to determine the terrain type in the location by comparing the location to the map. Based on the comparison the processing circuitry may be capable of detecting landscape, like the shapes of terrain and/or high buildings, that may affect the satellite connection in the location of the wearable training computer and also capable of applying this information when determining the optimum positioning configuration. In an embodiment, the map is stored in the local memory of the wearable training computer. In another embodiment the map is stored in the external database, like in a cloud database. In a further embodiment, the processing circuitry may apply web-based map application, like Google Maps® for determining the terrain type in the location.

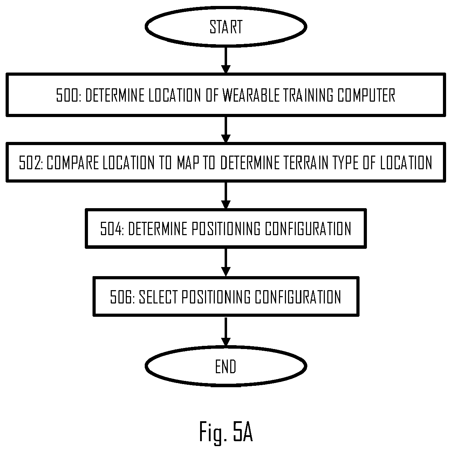

Figure 5A illustrates a flowchart according to an embodiment. In step 500 the location of the wearable training computer is determined, in step 502 the location is compared to the map to determine the terrain type of the location, in step 504 the optimal positioning configuration is determined based on the location with the terrain type and in the step 506 the optimal positioning configuration is selected to be used in positioning of the wearable training computer during the physical exercise.

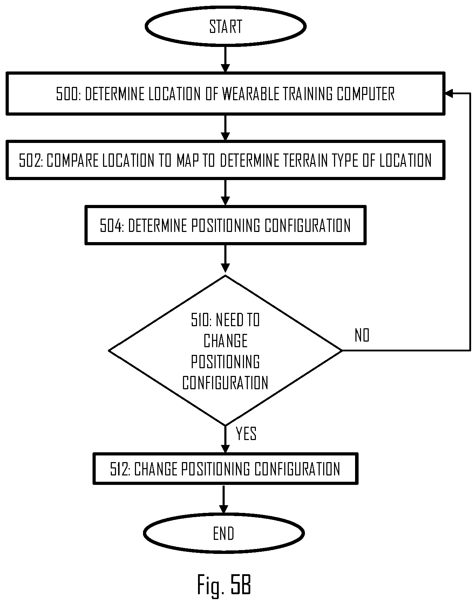

Figure 5B illustrates a flowchart according to another embodiment. In step 500 the location of the wearable training computer is determined, in step 502 the location is compared to the map to determine the terrain type of the location, in step 504 the optimal positioning configuration is determined based on the location with the terrain type and in step 510 a need for changing the positioning configuration is determined. If the change is needed, in step 512 the positioning configuration is changed and if the change is not needed, the process goes back to the step 500.

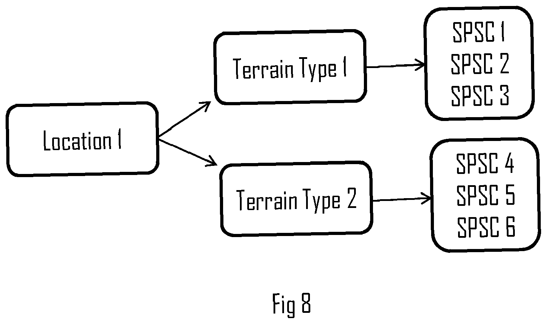

In an embodiment, the selection of the positioning configuration is based on the selection table wherein the locations with terrain types and preferred positioning configurations are defined. As described above, the selection table may be exploited when selecting the positioning configuration based on the location of the wearable training computer. The selection table may further comprise the terrain type used in the determination of the positioning configuration. Therefore, in addition to the location of the wearable training computer, also the terrain type in the location is determined. One location may have, for example, two different terrain types that may affect the selection of the positioning configuration and each terrain type may have different preferred positioning configuration. Referring to Figure 8, at first the location of the wearable training computer (location 1) is determined, then the terrain type in the location (terrain types 1-2). When the location and the terrain type are determined, then the selection table presents the preferred positioning configuration(s) (SPSC 1-6) for the location having certain terrain type. There may be one or more preferred positioning configuration for each terrain type.

In an embodiment, the wearable training computer may form a connection to another appliance, like for example a mobile phone. The appliance may determine the terrain type in the location of the wearable training computer and may provide the information about the terrain type to the wearable training computer. In other words, the wearable training computer provide its location to the other appliance that perform the determining of the terrain type in that location. The other appliance transmits the terrain type information for processing circuitry for determining the optimal positioning configuration in that certain location.

The performance of the positioning configuration may also be determined with other attributes than mentioned signal performance, number of the satellites, the location of the wearable training computer or the terrain type in the location. Also several different attributes may be combined when selecting the optimal positioning configuration. Hence, the selection is not necessarily done based on only one attribute.

In an embodiment, the processing circuitry is configured to determine the performance of the satellite positioning system configuration in predetermined time intervals. The performance of the positioning configuration may be monitored regularly that the wearable training computer is capable of providing the optimum performance for positioning in different situations. The monitoring may be performed during the whole physical exercise. The performance of the positioning configuration may be determined once per minute or once per ten minutes, for example. The time interval may vary also during the one physical exercise. The terrain type or changes in the terrain type may be taken account when defining the time intervals.

In an embodiment, the time intervals for determining the performance of the satellite positioning system configuration is based on an activity type and /or change in the activity type. Also a location in which the activity is performed may be taken into account, for example, is the activity performed outdoors or indoors. For example, when playing football in a football field, it is likely that the positioning configuration is not changed during the activity and a need for changing the positioning configuration may be checked less often. If the activity is motorcycling, it is possible that positioning configuration is changed during the ride, especially if a driven distance is long and a speed is high. Then the need for changing the positioning configuration may be checked more often.

In an embodiment, a progress of the wearable training computer during the physical exercise is used to determine a need for monitoring the performance of the positioning configuration. For example, the distance from the start point or the previous point, in which the performance was determined, may trigger determination of the performance of the positioning configuration.

In an embodiment, a speed of the wearable training computer during the physical exercise is used to determine a need for monitoring the performance of the positioning configuration. For example, if the speed during the physical exercise is high, the determination of the performance of the positioning configuration may be performed more often compared to the situation where the speed is low.

In an embodiment, a training plan of the physical exercise is used to determine a need for monitoring the performance of the positioning configuration. The training plan may be a route on the map, for example. The route may be used for determining in advance how often the performance of the positioning configuration is monitored. The processing circuitry may determine the distance and the terrain type of the route and based on the determination to define when the performance of the positioning configuration may be monitored and/or the positioning configuration changed.

In an embodiment, the processing circuitry is configured to determine the performance of the satellite positioning system configurations when the performance of the selected satellite positioning system go under a predetermined level. There may be defined the level for the performance of the selected positioning configuration and when the performance go under the level, the processing circuitry is configured to monitor may the some other position configuration be capable of providing better performance than the selected one. If yes, the position configuration may be changed.

In an embodiment, the processing circuitry is configured to predict, based on the location and a velocity of the wearable training computer, a need for changing the selected satellite positioning system configuration. The velocity may comprise the speed and heading of the wearable training computer. The processing circuitry may analyse the ongoing physical exercise and based on the analyse, the processing circuitry may predict when the positioning configuration may be changed. For example, the processing circuitry may determine the location of the wearable training computer as well its speed, and based on this information the processing circuitry may calculate when wearable training computer is moved to the location wherein the new positioning configuration may be needed. Hence, the processing unit may exploit the progress of the ongoing physical exercise for defining the need to change the positioning configuration in advance.

In an embodiment, the processing circuitry is configured to predict, based on a physical exercise plan, a need for changing the selected satellite positioning system configuration. For example, the plan of the physical exercise may be fed into the wearable training computer before the physical exercise and the plan may comprise a route of the physical exercise. The processing circuitry may determine, based on the route, which positioning configuration is used in different points of the route and where the positioning configuration may be changed. In other words, the processing circuitry may create a plan configured to define which configuration is use in different positions and in which location the change is done. Based on the route, the processing circuitry is capable of determining the terrain types in the route that may affect the selection of the positioning configuration. Also sport type of the physical exercise may be taken into account. It may also be possible that only one positioning configuration is used if, based on the determining of the route, it seems that there are no needs to change the configuration during the physical exercise.

In an embodiment, the processing circuitry is configured to change the positioning configuration based on the actual performance of the positioning configuration unlike the predicted needs for changing the positioning configuration.

In an embodiment, the processing circuitry is configured to change the selected satellite positioning system configuration, based on the predicted need, prior to deterioration of performance of the selected satellite positioning system. The processing circuitry may predict the needs for changing the positioning configuration and also change the configuration before the performance of the selected configuration is too low. For example, the processing circuitry may predict that the selected positioning configuration should be changed to another in some certain location of the wearable training computer. The change may be done, for example, when another configuration provides better performance than the selected one. In other words, before losing the satellite connection of the selected positioning configuration.

In an embodiment, the location information is received from at least one of a mobile phone, a cellular base station, the satellite positioning system, a last known location of the wearable training computer and/or a training plan. As described earlier, the location of the training computer is determined before the selection of the optimum positioning configuration. The determining is based on the location information received by the processing circuitry. The location information refers to data that is used for determining the location of the wearable training computer, and the location is later used for determining and selecting the positioning configuration used for positioning the wearable training computer during the exercise.

In an embodiment, the processing circuitry receives the location information form the mobile phone. For example, the training computer may create a connection to the mobile phone for receiving the location information. The location information received from the mobile phone may comprise, for example, position coordinates, place names, addresses and/or an ephemeris and an almanac data for satellite constellation.

In an embodiment, the processing circuitry receives the location information from the cellular base station. For example, the training computer may create a connection to the cellular base station for receiving the location information. The location information received from the cellular base station may comprise, for example, the position coordinates, the place names, the addresses and/or the ephemeris and almanac data for the satellite constellation.

In an embodiment, the processing circuitry receives the location information from the satellite positioning system. For example, the training computer may determine the location of the wearable training computer by activating its satellite positioning receiver to receive satellite positioning signals by using a default satellite positioning receiver configuration. The default positioning configuration is not necessarily used for determining the location of the wearable training computer during the physical exercise. It may be used only for locating the wearable training computer before the selection of the positioning configuration used during the physical exercise. The location information received from the satellite positioning system may comprise, for example, ranging signals and navigation messages comprising the ephemeris and almanac data (data about time and status of the satellite constellation).

In an embodiment, the processing circuitry receives the location information from the last known location of the training computer. For example, the processing circuitry may use the last determined location of the training computer for determining the optimum positioning configuration. The location information received from the last known location may comprise, for example, the position coordinates, the place names and the addresses.

In an embodiment, the processing circuitry receives the location information from the training plan. The training plan may be created by the user of the wearable training computer and it comprises information about the activity he/she is going to perform. The location information received from the training plan may comprise, for example, the position coordinates, the place names and/or routes of the sport activities.In an embodiment, the wearable training computer comprises a plurality of modes having different requirements for the satellite positioning system configuration, and wherein the processing circuitry is configured to select the satellite positioning system configuration based on the selected mode of the wearable training computer. For example, the wearable training computer may have two modes, a first one for optimizing the performance of the positioning and a second one optimizing the power consumption.

In an embodiment, the wearable training computer comprises a mode of optimizing the positioning performance. The satellite positioning system configuration may be selected such that it provides an optimal performance for the positioning in the location of the wearable training computer. In other words, the selection is made only to provide the optimum positioning performance and, for example, power consumption of the wearable training computer is not taken into account. The wearable training computer may select as many satellite positioning systems and the different frequency band as needed to provide the optimum performance for positioning. The satellite positioning system configuration capable of providing the optimum performance for positioning may increase the power consumption of the wearable training computer. In an embodiment, the wearable training computer comprises a mode of optimizing the power consumption. Then the satellite positioning system configuration may be selected based on the power consumption of the wearable training computer. In other words, the configuration is adjusted to enable the positioning of the wearable training computer but also optimizing the power consumption of the wearable training computer during the physical exercise. Then the performance of the positioning provided by the satellite positioning system configuration may be lower compared to the configuration that is optimized only to provide as efficient positioning as possible. For example, two satellite positioning systems and only one frequency may be allowed to be selected in mode of the power consumption optimization.

In an embodiment, the processing circuitry is configured to collect positioning configuration data during the positioning. The processing circuitry may further store the collected data into the database, like to the outer server. The positioning configuration data may be collected in addition to heart rate, location and movement data. The positioning configuration data may comprise, for example, the configuration related information about the setting of the wearable training computer during the positioning. The stored data may be used, for example, for correcting possible errors in routes caused by the positioning configurations.

In an embodiment, the selection of the positioning configuration is based on a satellite performance map. For example, each satellite positioning system may have the performance map(s) providing information about the performances of the configurations in different locations. In other words, which configuration provides the best performance in some certain location. The performance map may be based on, for example, a signal performance like the signal-to-noise ratio, SNR. The performance may also be based on other performance parameters described in this application.

In an embodiment, the positioning system of the wearable training computer is always on. In other words, the positioning system is not turned off in cases when the positioning system is not needed. The processing circuitry is configured to determine the performance of the satellite positioning system configuration in the predetermined time intervals as described in examples above. The time intervals for determining the performance of the satellite positioning system configuration may be based on the activity and /or change in the activity like, for example, when the user of the wearable training computer is going from inside to outside (or vice versa), starting training, changing vehicle and/or going to bed.

In an embodiment, a user of the wearable training computer selects the mode via a user interface of the wearable training computer. Based on the selection, the processing circuitry may determine the positioning configuration.

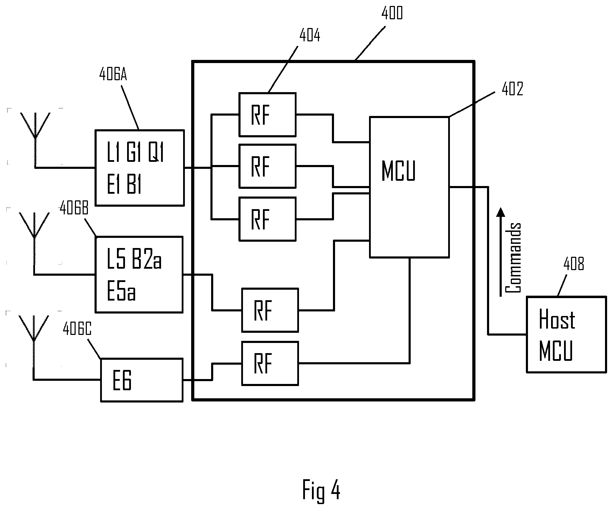

Figure 4, illustrates a wiring diagram of a positioning configuration chipset 400 according to an embodiment. The chipset comprises a microcontroller (MCU) 402, a plurality of RF-components 404 and antennas 406A-C. The positioning configuration shipset 400 may be coupled with a host MCU 408, wherein the host MCU 408 is configured to provide commands for the positioning configuration shipset 400. For example, a command to change the positioning configuration may be performed by the host MCU 408. The host MCU may be, for example, the main MCU of the wearable training computer. The RF-components 404 may comprise AD-converters, amplifiers and downconverters, for example. The antenna components may comprise the amplifiers and filters, for example. One antenna is configured to be used with one frequency band. For example, the antenna 406A is configured for the frequency band ∼1560 - 1610MHz, wherein the GPS L1, Galiloe E1, BeiDou B1, QZSS L1 and Glonass G1 frequencies are operating. The antenna 406B is configured to the frequency band ∼1150 - 1240MHz, wherein the GPS L5, Galileo E5a and BeiDou B2a are operating, for example. The positioning configuration chipset is controlled by the main MCU of the wearable training computer (processing circuitry). For example, the positioning configuration SPSC1 illustrated in Figure 3A may use the first antenna 406A and the configuration SPSC2 may use the second antenna 406B. The SPSC3 illustrated in Figure 3B may use both the first and the second antennas 406A-B. When the positioning configuration comprises more than one frequency per satellite positioning system, also more antennas are needed for positioning. This may increase a power consumption of the wearable training computer.

In an embodiment, one antenna is configured to be used with two frequency bands. Referring to the example above, the first antenna may be capable to cover both ∼1560 - 1610MHz and ∼1150 - 1240MHz frequency bands and hence, the first antenna 406A may be used with the first and the second configurations SPSC1, SPSC2, for example. As described above, the wearable training computer may be used to measure biometric data from a user of the wearable training computer during the physical exercise. In an embodiment, the wearable training computer comprises one or more biometric sensors for measuring biometric data from the user of the wearable training computer. The biometric sensors may be attachable to an object such as a human body for use during a physical exercise and/or during daily routines. The biometrical sensors are used to measure the biometric data from the user's performance during the physical exercise and to output the data to the user via the user interface of the wearable training computer and/or another apparatus. The biometric data, measured by the biometric sensors, may comprise a biomedical and/or biomechanical data. The biometric data, measured from the user, may comprise, for example any of the following: heart rate, blood pressure, temperature, stress level and/or respiration rate. The biometric data is utilized to enable efficient training.

In an embodiment, the one or more biometric sensors comprise one or more electrodes. The electrodes are utilized in the heart activity measurement, like an electrocardiogram (ECG), wherein the electrodes are attached to the user's skin for measuring the ECG-signal.

In an embodiment, the one or more biometric sensors comprise one or more optical sensors. The heart activity may also be measured by the optical sensors. The optical sensors are used in a photoplethysmogram (PPG) in which the optical sensor may detect the heart activity of the user by an optical measurement.

In some embodiment, different sensors may be combined in the wearable training computer to measure desired biometric data from the user.

Let us now describe an example how the solution according to the invention may be applied in use. The user of the wearable training computer is going to start a physical exercise and he/she would like to use satellite positioning system for locating the wearable training computer during the exercise. The processing circuitry of the wearable training computer receives the location information, for example, from a mobile phone of the user by creating a connection to the phone. The location information may be received also from some other source as described earlier in this application. Based on the received location information, the processing circuitry determine the satellite positioning system configuration which provides the best positioning performance in the location of the wearable training computer and automatically select the configuration. The satellite positioning system configuration comprises one or more satellite positioning systems. Also more than one frequency per satellite positioning system may be selected.

The processing circuitry may compare the location of the wearable training computer to the map having terrain information to determine a landscape in the location. For example, if the location is in Tokyo city centre, the positioning configuration may comprise a plurality of the satellite positioning systems and more than one frequency band because the location may be very difficult from a satellite visibility point of view. The positioning configuration may be GPS (freq. L1 and L5), Galileo (freq. E1 and E5a), BeiDou (freq. B1) and QZSS (freq. Q1), for example. Then the performance of the satellite configuration is weighted over the power consumption of the wearable training computer.

In another example, the location of the wearable training computer may be in the rural area where landscape is open. Then the processing circuitry may select a simpler configuration because the location is not difficult from the satellite visibility point of view. The positioning configuration may be as simple as GPS (freq. L1) and Galileo (freq. E1). Then the power consumption of the wearable training computer can be optimized.

In both examples the processing circuitry may be capable of monitoring the performance of the positioning configurations. If the processing circuitry detects that the performance of the selected configuration is deteriorating and/or some other positioning configuration than selected provides better performance, the processing circuitry may change the positioning configuration. Hence, the wearable training computer automatically may provide as high positioning performance as possible.

The term "optimal performance" refers to the level wherein the positioning configuration is capable of providing an accurate positioning for the wearable training computer. In other words, the quality of the positioning is high enough such that the accurate positioning without any bigger issues is possible. The optimal performance is not necessarily the highest available positioning performance. For example, if two satellite positioning systems with one frequency band provide the optimum level for positioning, the configuration is not necessarily changed to the other one that could provide even higher performance with more satellite positioning systems and frequency bands.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as the technology advances, the inventive concept can be implemented in various ways. The invention and its embodiments are not limited to the examples described above but may vary within the scope of the claims.

## Claims

1. A wearable training computer, comprising:
a processing circuitry configured to determine a location of the wearable training computer based on received location information, and
based on the location of the wearable training computer, the processing circuitry is further configured to select a satellite positioning system configuration used for determining the location of the wearable training computer during a physical exercise.

2. The wearable training computer of claim 1, wherein a plurality of satellite positioning systems are configured, in the selected satellite positioning system configuration, to determine the location of the wearable training computer during a physical exercise.

3. The wearable training computer of claims 1 - 2, wherein the processing circuitry is configured to select a frequency of the satellite positioning system based on performance of the satellite positioning system configuration.

4. The wearable training computer of any preceding claim, wherein the processing circuitry is configured to change the selected satellite positioning system configuration based on performance of the satellite positioning system configuration.

5. The wearable training computer of claims 3 - 4, wherein the performance of the satellite positioning system configuration is determined based on a signal performance of the wearable training computer.

6. The wearable training computer of claim 3 - 5, wherein the performance of the satellite positioning system configuration is determined based on a detected number of satellites in the satellite positioning system.

7. The wearable training computer of claim 3 - 6, wherein the performance of the satellite positioning system configuration is determined based on the location of the wearable training computer.

8. The wearable training computer of claim 7, wherein the performance of the satellite positioning system configuration is determined based on a terrain type in the location of the wearable training computer.

9. The wearable training computer of claim 8, wherein the processing circuitry is configured to determine the terrain type based on a map.

10. The wearable training computer of claims 4 - 8, wherein the processing circuitry is configured to determine the performance of the satellite positioning system configuration in predetermined time intervals.

11. The wearable training computer of any preceding claim, wherein the processing circuitry is configured to predict, based on the location and a velocity of the wearable training computer, a need for changing the selected satellite positioning system configuration.

12. The wearable training computer of any preceding claim, wherein the processing circuitry is configured to predict, based on a physical exercise plan, a need for changing the selected satellite positioning system configuration.

13. The wearable training computer of claims 11 - 12, wherein the processing circuitry is configured to change the selected satellite positioning system configuration, based on the predicted need, prior to deterioration of performance of the selected satellite positioning system.

14. The wearable training computer of any preceding claim, wherein the location information is received from at least one of a mobile phone, a cellular base station, the satellite positioning system, a last known location of the wearable training computer and/or a training plan.

15. The wearable training computer of any preceding claim, wherein the wearable training computer comprises a plurality of modes having different requirements for the satellite positioning system configuration, and wherein the processing circuitry is configured to select the satellite positioning system configuration based on the selected mode of the wearable training computer.
